Europäisches Patentamt

European Patent Office

Office européen des brevets

(19)

(11) Veröffentlichungsnummer : **0 355 100 B1**

(12) # EUROPÄISCHE PATENTSCHRIFT

(45) Veröffentlichungstag der Patentschrift :
25.11.92 Patentblatt 92/48

(51) Int. Cl.⁵ : **B25J 9/04, B25J 9/10,**
**// B25J19/00**

(21) Anmeldenummer : 88903219.9

(22) Anmeldetag : 25.03.88

(86) Internationale Anmeldenummer :
PCT/EP88/00253

(87) Internationale Veröffentlichungsnummer :
WO 88/07437 06.10.88 Gazette 88/22

(54) **INDUSTRIEROBOTER.**

(30) Priorität : 31.03.87 DE 3710687

(43) Veröffentlichungstag der Anmeldung :
28.02.90 Patentblatt 90/09

(45) Bekanntmachung des Hinweises auf die
Patenterteilung :
25.11.92 Patentblatt 92/48

(84) Benannte Vertragsstaaten :
DE FR IT SE

(56) Entgegenhaltungen :
EP-A- 0 012 237
EP-A- 0 169 473
EP-A- 0 199 146
EP-A- 0 203 202
FR-A- 2 590 197
GB-A- 2 145 055
US-A- 4 518 308

(56) Entgegenhaltungen :
Werkstattstechnik, Zeitschrift für Industrielle
Fertigung, Vol. 74, No. 12, December 1984,
Springer-Verlag (Würzburg,
DE),"Montageroboter mit modular aufgebauten Achsen", pages 709-710, see page 709,
columns 1,2

(73) Patentinhaber : SIEMENS
AKTIENGESELLSCHAFT
Wittelsbacherplatz 2
W-8000 München 2 (DE)

(72) Erfinder : KEPPLER, Rainer
Jahnstr. 48
W-8521 Poxdorf (DE)
Erfinder : KOLB, Roland
Ahornweg 2
W-8551 Hemhofen (DE)
Erfinder : EBERLE, Manfred
Würzburger Ring 70
W-8520 Erlangen (DE)

**Beschreibung**

Die Erfindung bezieht sich auf einen Industrieroboter gemäß dem Oberbegriff des Anspruches 1.

Mit diesem Oberbegriff wird auf eine Anordnung bezug genommen, wie sie beispielsweise in der US-PS 46 10 598 beschrieben ist.

Für Montageaufgaben werden heute sehr häufig Roboter in sogenannter SCARA-bauweise verwendet. In der vorstehend zitierten Literaturstelle ist ein derartiges System beschrieben.

Diese relativ einfachen Roboter verfügen meistens über eine Hubachse und drei Schwenkachsen.

Die Aufgabe der vorliegenden Erfindung besteht darin, einen einfachen und zuverlässigen Industrieroboter der eingangs genannten Gattung zu schaffen.

Diese Aufgabe wird durch die kennzeichnenden Merkmale des Anspruches 1 gelöst.

Vorteilhafte Ausgestaltungen finden sich in den Unteransprüchen.

Anhand eines in der Zeichnung dargestellten Ausführungsbeispiels sei die Erfindung näher erläutert; es zeigen:

Figur 1 den Aufbau des Industrieroboters,

Figur 2 die Kraftübertragung im Rahmen der zweiten Schwenkachse und

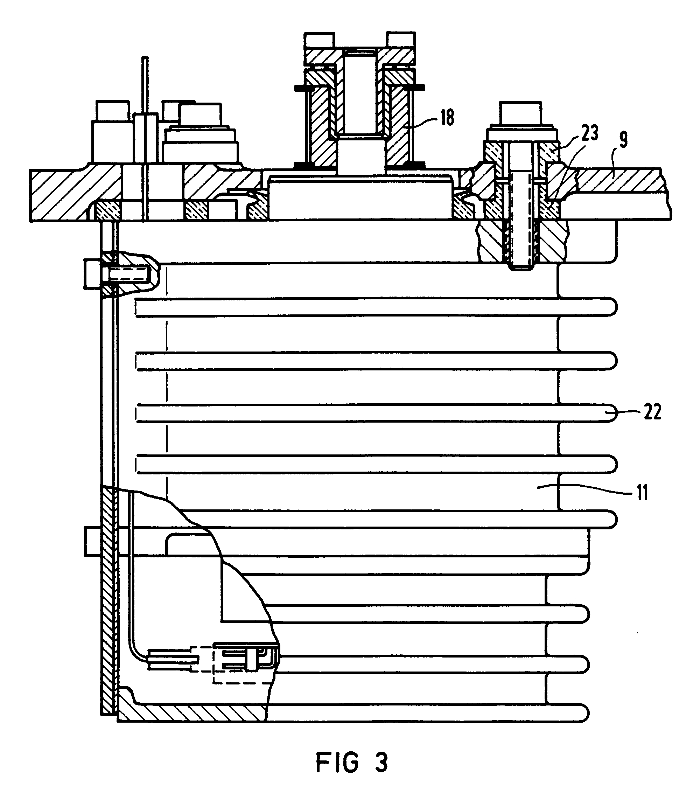

Figur 3 die Aufhängung eines Motors im Schwenkarm.

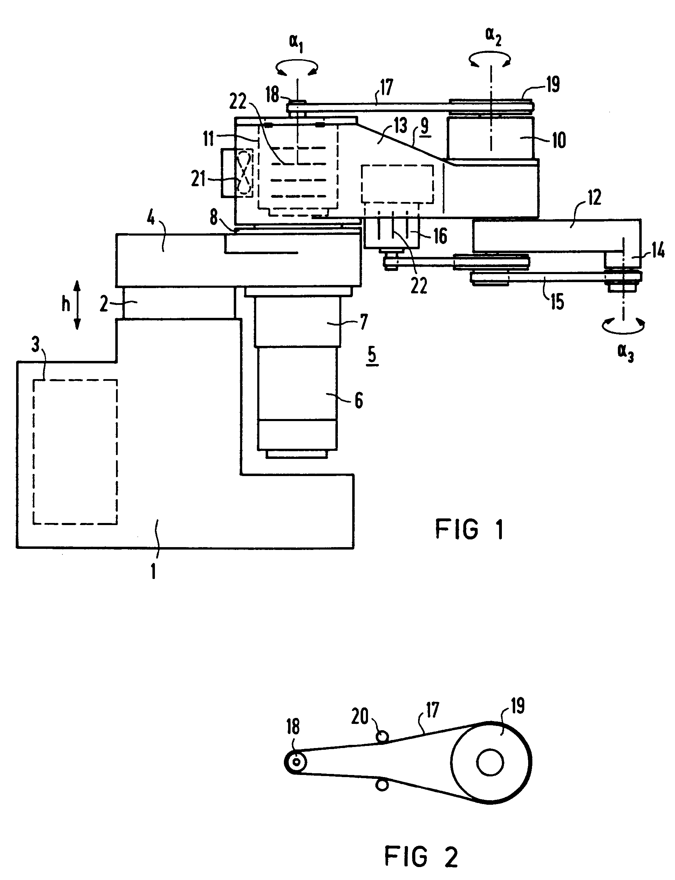

Wie aus Figur 1 ersichtlich, besteht der Roboter aus einer Hubachse 1, durch deren Hubsäule 2 eine Bewegung in Richtung des Doppelpfeiles h möglich ist. Zum Antrieb dieser Hubsäule 2 für die Vertikalbewegung dient ein Elektromotor 3, der über nicht dargestellte Zahnstangen usw. die Hubsäule antreibt.

Die Hubsäule 2 ist am oberen Ende mit einer seitlichen Auskragung 4 versehen, in die das erste Drehgelenk 5 als - lösbar zusammengeschraubte - bauliche Einheit eingesetzt ist. Durch dieses Drehgelenk 5, welches aus Motor 6, Getriebe 7 und Kupplungsflansch 8 besteht, ist eine Drehbewegung in der Schwenkachse $\alpha$ 1 möglich.

Das vorzugsweise als Planetengetriebe ausgeführte Getriebe 7 weist dabei vorteilhafterweise einen verlängerten Planetenradträger auf, dessen Lagerung gleichzeitig zur Lagerung des Drehgelenkes 5 in der Auskragung 4 dient.

Auf dem Kuppelflansch 8 ist lösbar ein horizontaler Schwenkarm 9 befestigt, der aus den beiden über die Schwenkachse $\alpha$ 2 gegeneinander verschwenkbaren Armteilen 12 und 13 besteht. Das Drehgelenk 10 der Schwenkachse 2 wird im wesentlichen durch ein Getriebe gebildet, das in ähnlicher Weise wie das Getriebe 7 gelagert ist. Zum Antrieb des Gelenkes 10 dient ein Elektromotor 11, dessen Achse in etwa mit der Achse des Motors 6 zusammenfällt. Dieser im Armteil 13 untergebrachte Motor treibt über einen Zahnriemen 17 das Getriebe an. Zwischen dem Abtriebsritzel 18 des Motors 11 und dem Antriebsritzel 19 des Getriebes sind zwei Führungsrollen 20 für den Zahnriemen 17 vorgesehen, mit denen ein definierter Umschlingungswinkel erreicht werden kann.

Der Antrieb der dritten schwenkachse $\alpha$ 3 mit dem Drehgelenk 14 geschieht über einen Zahnriemen 15 von einem Elektromotor 16 her, der ebenfalls im Armteil 13 vertikal stehend angeordnet ist.

Wie aus der Konstruktion ersichtlich, ergibt sich durch die vorstehend geschilderten Merkmale eine gedrungene und stabile Konstruktion eines Montageroboters.

Mit Vorteil werden dabei noch die Armteile so ausgebildet, daß große Schwenkwinkel möglich sind, z.B. wird vorteilhafterweise das erste Armteil 13 mittig verjüngt.

Durch die elektrischen Motore 11, 16 im Schwenkarm kann es zu unerwünschten Übertemperaturen kommen, die Wärmedehnungen im Arm hervorrufen. Hierdurch kann die Genauigkeit beeinträchtigt werden, da z.B. die tatsächliche Armlänge nicht mehr mit der steuerungsseitig berücksichtigten Armlänge übereinstimmt. Zur Abhilfe wird im Arm eine Durchzugsbelüftung vorgesehen. Die Kühlluft tritt im Bereich des Motors 16 ein, überstreicht die Kühlrippen 22 der beiden Motoren 16 und 11 und wird vom Ventilator 21 ausgeblasen. Die Motoren 16 und 11 sind über Isolierungen 23 im Schwenkarm aufgehängt.

**Patentansprüche**

1. Industrieroboter mit

a) mindestens einer Hubachse und drei Schwenkachsen,

b) einem horizontalen Schwenkarm mit zwei Armteilen, dem die Schwenkachsen zugeordnet sind und

c) Einzelantrieben für die einzelnen Achsbewegungen,

**gekennzeichnet** durch folgende Merkmale :

d) die Hubsäule (2) der Hubachse (1) ist mit einer seitlichen Auskragung (4) versehen, in die das Drehgelenk (5) der ersten Schwenkachse ($\alpha_1$) einsetzbar ist,

e) das Drehgelenk (5) besteht aus der baulichen Einheit von Motor (6), Getriebe (7) und Ankuppelflansch (8), wobei die Lagerung im Bereich des Getriebes (7) liegt,

f) der Schwenkarm (9) ist auf dem Ankuppelflansch (8) lösbar befestigt und

g) der Motor (11) für das Drehgelenk (10) der zweiten Schwenkachse liegt in etwa in der Achse des ersten Drehgelenkes (5), wohingegen Getriebe und Lagerung davon getrennt in der zweiten Schwenkachse ($\alpha_2$) liegen und über Übertragungsmittel (17) mit dem Motor (11) gekuppelt sind.

2. Industrieroboter nach Anspruch 1, **dadurch gekennzeichnet**, daß die Lagerung des ersten Drehgelenks (5) gleichzeitig einen Teil der Lagerung des Getriebes (7) bildet.

3. Industrieroboter nach Anspruch 1 und 2, **dadurch gekennzeichnet**, daß für das erste und zweite Drehgelenk (5, 10) Planetengetriebe vorgesehen sind, deren verlängerte Planetenträger die Lagerung tragen.

4. Industrieroboter nach Anspruch 1, **dadurch gekennzeichnet**, daß als Übertragungsmittel ein Zahnriemen (17) vorgesehen ist, welcher durch Führungsrollen (20) mit einem definierten Winkel das Antriebsritzel des Getriebes im zweiten Drehgelenk (10) umschlingt.

5. Industrieroboter nach Anspruch 1, **dadurch gekennzeichnet**, daß die dritte Schwenkachse ($\alpha_3$) durch einen im ersten Armteil (13) angeordneten Motor (16) über Zahnriemen (15) antreibbar ist.

6. Industrieroboter nach Anspruch 1, **dadurch gekennzeichnet**, daß der erste Armteil (13) des Schwenkarmes (9) mittig verjüngt ist.

7. Industrieroboter nach Anspruch 1, **dadurch gekennzeichnet**, daß im Schwenkarm eine Durchzugsbelüftung vorgesehen ist.

8. Industrieroboter nach Anspruch 1, **dadurch gekennzeichnet**, daß die Motoren (11, 16) gegenüber dem Schwenkarm (9) wärmegedämmt sind.

## Claims

1. Industrial robot having
   a) at least one lifting axis and three axes of rotation,
   b) a horizontal swivel arm with two arm portions, with which the axes of rotation are associated, and
   c) individual drive units for the individual axial movements,
   characterised by the following features:
   d) the lifting column (2) of the lifting axis (1) is provided with a lateral projection (4) into which the rotary joint (5) of the first axis of rotation ($\alpha_1$) can be inserted,
   e) the rotary joint (5) comprises the structural unit having motor (6), gear unit (7) and coupling flange (8), the bearing assembly lying in the region of the gear unit (7),
   f) the swivel arm (9) is removably secured on the coupling flange (8), and
   g) the motor (11) for the rotary joint (10) of the second axis of rotation lies approximately in the axis of the first rotary joint (5), whereas the gear unit and bearing assembly separated therefrom lie in the second axis of rotation ($\alpha_2$) and are coupled by means of transmission means (17) to the motor (11).

2. Industrial robot according to claim 1, characterised in that the bearing assembly of the first rotary joint (5) at the same time forms a portion of the bearing assembly of the gear unit (7).

3. Industrial robot according to claim 1 and 2, characterised in that for the first and second rotary joint (5, 10) planetary gears are provided whose extended planet carriers carry the bearing assembly.

4. Industrial robot according to claim 1, characterised in that a toothed belt (17) is provided as transmission means and loops round the drive pinion of the gear unit in the second rotary joint (10) with a defined angle by means of guide rollers (20).

5. Industrial robot according to claim 1, characterised in that the third axis of rotation ($\alpha_3$) can be driven by a motor (16), arranged in the first arm portion (13), by means of a toothed belt (15).

6. Industrial robot according to claim 1, characterised in that the first arm portion (13) of the swivel arm (9) is tapered in the middle.

7. Industrial robot according to claim 1, characterised in that through-ventilation is provided in the swivel arm.

8. Industrial robot according to claim 1, characterised in that the motors (11, 16) are heat-insulated with respect to the swivel arm (9).

## Revendications

1. Robot industriel comportant
   a) au moins un axe de translation et trois axes de pivotement,
   b) un bras pivotant horizontal comportant deux éléments auxquels sont associés les axes de pivotement, et
   c) des dispositifs individuels d'entraînement pour les différents déplacements suivant les axes,
   caractérisé par les particularités suivantes :
   d) la colonne de translation (2) de l'axe de translation (1) est équipée d'une partie en porte-à-faux (4), dans laquelle peut être insérée l'articulation tournante (5) du premier axe de pivotement ($\alpha_1$),

e) l'articulation tournante (5) est constituée par l'unité de construction formée d'un moteur (6), d'un mécanisme de transmission (7) et d'une bride d'accouplement (8), le support par palier étant situé au niveau du mécanisme de transmission (7),

f) le bras pivotant (9) est fixé de façon amovible à la bride d'accouplement (8), et

g) le moteur (11) pour l'articulation tournante (10) du second axe de pivotement est monté approximativement sur l'axe de la première articulation tournante (5), tandis que le mécanisme de transmission et le palier de support sont disposés, en étant séparés du moteur, sur le second axe de pivotement ($\alpha_2$) et sont accouplés au moteur (11) par l'intermédiaire de moyens de transmission (17).

2. Robot industriel suivant la revendication 1, caractérisé par le fait que le palier de support de la première articulation tournante (5) constitue simultanément une partie du palier de support du mécanisme de transmission (7).

3. Robot industriel suivant les revendications 1 et 2, caractérisé par le fait que pour les première et seconde articulations tournantes (5,10), il est prévu des engrenages planétaires, dont les porte-satellites prolongés portent le palier de support.

4. Robot industriel suivant la revendication 1, caractérisé par le fait qu'il est prévu, comme moyen de transmission, une courroie dentée (17), qui, en circulant sur des galets de guidage (20), entoure sur un angle défini le pignon d'entraînement du mécanisme de transmission dans la seconde articulation tournante (10).

5. Robot industriel suivant la revendication 1, caractérisé par le fait que le troisième axe de pivotement ($\alpha_3$) peut être entraîné par l'intermédiaire d'une courroie dentée (15), par un moteur (16) disposé dans le premier élément (13) du bras.

6. Robot industriel suivant la revendication 1, caractérisé par le fait que le premier élément (13) du bras pivotant (9) possède une forme rétrécie en son milieu.

7. Robot industriel suivant la revendication 1, caractérisé par le fait qu'une ventilation est prévue à l'intérieur du bras pivotant.

8. Robot industriel suivant la revendication 1, caractérisé par le fait que les moteurs (11,16) comportent une partie isolée du point de vue thermique par rapport au bras pivotant (9).

FIG 1

FIG 2

FIG 3